Europäisches Patentamt

European Patent Office

Office européen des brevets

(19)

(11) Publication number: **0 372 758**

**A1**

(12) **EUROPEAN PATENT APPLICATION**

(21) Application number: **89312179.8**

(22) Date of filing: **23.11.89**

(51) Int. Cl.5: **C08K 3/00, C08L 23/08, C08L 51/06, G21F 1/10**

(30) Priority: **25.11.88 GB 8827531**

(43) Date of publication of application:
**13.06.90 Bulletin 90/24**

(84) Designated Contracting States:
**AT BE CH DE ES FR GB GR IT LI LU NL SE**

(71) Applicant: **DU PONT CANADA INC.**
**Box 2200 Streetsville**
**Mississauga Ontario L5M 2H3(CA)**

Applicant: **Lilley, Martin John**
**445 St Clements Avenue**
**Toronto Ontario M5N 1M2(CA)**

(72) Inventor: **MacLeod, John Murdo,**
**P.O.Box 187, Kingston**
**Ontario K7L 4V8(CA)**
Inventor: **Servant, Raymond Hector,**
**2919 Appleton Court Oakville**
**Ontario L6V 6S5(CA)**

(74) Representative: **Harrison, David Christopher**
**et al**
**MEWBURN ELLIS 2 Cursitor Street**
**London EC4A 1BQ(GB)**

(54) **Highly filled compositions.**

(57) Highly filled materials are disclosed. The material is formed from a composition of 4-19% by weight of a defined polar thermoplastic polymer, 0-10% by weight of a plasticizer and 81-96% by weight of an inorganic composition. Preferably, the material provides attenuation against energy of greater than 0.1 keV that is equivalent to at least 0.1 mm of lead. The material may be used for containers, in apparel and other end-uses for protection against e.g. x-rays and gamma rays.

EP 0 372 758 A1

# HIGHLY FILLED COMPOSITIONS

The present invention relates to highly filled compositions, including highly filled compositions of polymers and elastomers, that may be used in a variety of end-uses, including attenuation of or protection against sound and electromagnetic radiation and as energy conducting materials. Articles formed from the composition, which contain in excess of 80% filler in a matrix of for instance polymer or elastomer, may be flexible or rigid, depending on the nature of the filler and the material used as the matrix.

Highly filled compositions are capable of being used in a wide variety of applications, especially protection against sound and against electromagnetic radiation and in electrically conductive applications e.g. shielding of apparatus. Examples include mobile flexible X-ray screens, folding X-ray doors, flexible electrical conductors, sound insulating materials, electromagnetic energy screens for apparel e.g. protection against x-rays and beta and gamma radiation, flexible magnets, electrical resistant heating mats and the like, and electrical grounding systems. In some such end-uses, it is important that the material be flexible and resistant against cracking e.g. apparel or containers, whereas in other end-uses it is preferred that the material be rigid e.g. in wall panels or ceiling tiles, or semi-rigid e.g. floor tiles.

A number of filled materials have been proposed for use as protection against radiation. For instance, Japanese patent application No. 58-053928 of K. Yamamoto, published 1983 March 30, discloses an elastic (rubber) foam material containing large quantities of metal constituents e.g. lead oxide; the use of material containing barium ferrite/nickel ferrite and barium ferrite/magnesium ferrite for protection against magnetism is also disclosed. The powdered metal constituents are used in amount, on a weight basis, that is greater than that of the base rubber material. The preferred rubber material is polychloroprene rubber, and in the examples the compositions contain 80-87.3% by weight of the above metal constituents. The compositions also contain minor amounts (<0.5%) of rubber processing aids e.g. magnesium oxide, zinc oxide and lead stearate.

Japanese patent application No. 57-141430 of K. Yamamoto, published 1982 September 01, discloses a leaded foam material comprising a foamed material having as its base a natural or synthetic rubber consisting of a mixture of rubber having a molecular weight averaging 20 000 with rubber having a molecular weight ranging from 2 000 to 12 000. The lead compounds are added to the base material in a proportion of 300 or more parts by weight of lead compound to 100 parts by weight of the base material and are uniformly distributed throughout the foamed material. The publication refers to organic and inorganic lead compounds, and exemplifies lead oxide in amounts of 80-87.3% by weight. The preferred rubber material is polychloroprene rubber, and the compositions contain minor amounts (<0.5%) of rubber processing aids e.g. magnesium oxide, zinc oxide and lead stearate.

Canadian Patent 815 609 of J. D. McCluer et al, issued 1969 June 17, discloses a flexible material comprising a fabric base and a lead-loaded elastomeric layer adhering to at least one surface of the fabric base. The layer has lead particles of a size smaller than 200 mesh dispersed throughout, the lead constituting at least 65% by weight of the total weight of the material. The lead-loaded elastomeric layer has a thickness of at least 125 mils (0.31 mm) and constitutes at least 68% by weight of the total weight of the material. The preferred elastomeric material is neoprene (polychloroprene).

Japanese patent application No. 61 228 051 of Dainichi Nippon Cables, published 1986 October 11, discloses compositions of ethylene/vinyl acetate and/or ethylene/ethyl acrylate copolymers that contain 5-50 parts of antimony oxide and 5-100 parts of barium sulphate, per 100 parts of polymer, as a wire coating composition. Cross linking of the coated wire with electrons is also disclosed.

U.S. Patent 4 563 494 discloses a polymer composition formed from at least one lanthanide oxide or hydroxide in an amount of 0.001 to 10% by weight of the compositions organic salts or complexes and a polymer containing e.g. acrylic or methacrylic acid or ester units, for use as a shield against neutron radiation.

U.K Patents 1 603 654 and 1 603 655, granted 1981 November 25, disclose compositions of metallic lead in polyvinyl chloride as an x-ray absorption material.

Japanese patent application 59 126 296 of Mitsui Petrochemical, published 1984 July 20, discloses the lamination of films of e.g. ethylene/vinyl acetate/carbon monoxide terpolymers onto films of e.g. ethylene/vinyl ester copolymers containing at least 50% by weight of metallic lead, for use in the atomic power industry.

Japanese patent application 57 005 732 of Furukawa Electric Co., published 1982 January 12, discloses compositions of polyolefins e.g. ethylene/vinyl acetate copolymers, containing 30-300 parts, per 100 parts of polymer, of an inorganic powder. The powder is exemplified by barium borate.

Heavy, thick sound insulation using specific low cost barium salts to replace lead compounds is disclosed in Chinese patent application 8600457 of Liu et al. The addition of 100-3000 parts by weight of a metal, metal oxide, metal salts or fillers e.g. iron oxide, ferrite, lead oxide, tin oxide, barium or lead sulphate, barium or lead carbonate, to bituminous or bituminous/rubber compositions is disclosed in Japanese patent application 60 079 065 of Ube Industries, published 1985 May 04. Sound insulating sheet may be obtained by coating iron foil with tin/lead, as is disclosed in Japanese patent application 60 026 651 of Riken KK, published 1985 February 09.

Compositions of polymers and powders of high specific gravity, for use in the manufacture of pipes, are disclosed in Japanese 62 080 031 of Dainichi Nippon Cables, published 1987 April 13. The compositions are formed from e.g. polyethylene, polypropylene and polyvinyl chloride and the powder is e.g. lead, iron, litharge or clay, which is used in amounts of 20-800 parts per 100 parts of polymer. Japanese 60 213 997 of Toyo Soda, published 1985 October 26, discloses sound insulation formed from 100 parts of polyvinyl chloride, 200-1000 parts of inorganic filler e.g. iron oxides, barium sulphate and lead powder, and plasticizers and stabilizers. Compositions of 100 parts of ethylene/butene-1 copolymers and 600 parts of lead monoxide are exemplified in Japanese 57 158 258 of Hitachi Cable KK, published 1982 September 30.

Japanese Kokai 59 126 296 of S. Madao et al, published 1984 July 20, relates to a laminated composition for shielding against radiation, formed from lead or lead compound in a copolymer resin laminated to plasticized polyvinyl chloride. The copolymer may contain roll releasing agents, blocking inhibiting agents and the like, while the polyvinyl chloride is exemplified as containing tin maleate and magnesium oxide.

Although the prior art reports compositions of fillers and polymers on a weight basis, it is the amount of filler on a volume basis that is understood to be more important, especially with respect to processing of the compositions. Generally, polymers filled to 5-25% by volume retain a high degree of flexibility, resilience, elongation, elasticity and the like, whereas polymers filled to 20-50% by volume, if achievable with the aid of plasticizers and suitable combinations of polymers and fillers, tend to be rigid or semi-rigid and brittle. In the latter, the polymer is essentially a binder or adhesive for the filler. So-called vinyl floor tiles are an example of highly filled polymer compositions, and they are generally brittle with low flexibility.

Radiation attenuation materials in the form of mixtures of two or more elements or compounds thereof are disclosed in the patent application of M.J. Lilley, G.E. Mawdsley, G.P. Reh and M.J. Yaffe filed concurrently herewith. Radiation protection material, especially in the form of apparel, is disclosed in the patent application of M.J. Lilley, J.M. MacLeod, G.E. Mawdsley, G.P. Reh and M.J. Yaffe also filed concurrently herewith.

A highly filled polymeric material formed from a composition of a thermoplastic polymer and containing elements or inorganic compounds, that may be used as an energy absorptive or conductive material e.g. for x-rays, gamma rays, sound or electricity, and which tends to be of lighter weight than conventional materials has now been found.

Accordingly, the present invention provides a highly filled material comprising a layer formed from a composition comprising:

(a) 4-19% by weight of a thermoplastic polymer selected from copolymers of ethylene with at least one of vinyl alkylate, alkyl acrylate, alkyl methacrylate, glycidyl methacrylate, acrylic acid, methacrylic acid and carbon monoxide, and mixtures thereof, ionomers of such copolymers, and such copolymers that have been grafted with a monomer selected from the group consisting of ethylenically unsaturated carboxylic acids and anhydrides and other derivatives thereof;

(b) 0-10% by weight of a plasticizer for such copolymers; and

(c) 81-96% by weight of a solid inorganic composition.

In a preferred embodiment of the material of the present invention, the inorganic composition consists essentially of at least one element or compound thereof selected from the group consisting of aluminum, antimony, barium, bismuth, cadmium, copper, iodine, iron, lead, magnesium, mercury, nickel, silver, tantalum, tellurium, tin, thallium, tungsten, uranium and zinc.

In a further embodiment, the layer of the polymer composition has a thickness such that the amount of attenuation of electromagnetic radiation having energies of greater than 10 keV is the equivalent of at least 0.1 mm of lead.

In another embodiment, the inorganic composition contains at least one element selected from bismuth, lead, mercury and uranium, and at least one element selected from antimony, barium, mercury, silver, tantalum, tellurium, tin and tungsten.

In yet another embodiment, the polymer composition has a flexural modulus in the range of 1 to 100 MPa.

The present invention provides an energy absorption or electrical conducting material comprising at least one layer formed from a layer of a composition comprising 4-19% by weight of a thermoplastic

3

polymer, 0-10% by weight of plasticizer and 81-96% by weight of a solid inorganic composition; the latter is also referred to herein as inorganic component or filler.

The polymer used to form the layer of the material of the present invention is selected from copolymers of ethylene with at least one of vinyl alkylate, alkyl acrylate, alkyl methacrylate, glycidyl methacrylate, acrylic acid, methacrylic acid and carbon monoxide, and mixtures thereof. The polymer may also be an ionomer of such copolymers, especially an ionomer in which the metallic ion is sodium, zinc or aluminum. In addition, the polymer may be such a copolymer that has been grafted with a monomer selected from the group consisting of ethylenically unsaturated carboxylic acids and anhydrides and other derivatives thereof. Examples of such polymers include ethylene/vinyl acetate copolymers, ethylene/methyl acrylate copolymers, ethylene/methyl methacrylate copolymers, ethylene/acrylic acid copolymers, ethylene/alkyl acrylate/glycidyl methacrylate copolymers, ethylene/methacrylic acid copolymers, ethylene/n-butyl acrylate/carbon monoxide copolymers, ethylene/vinyl acetate/carbon monoxide copolymers and related polymers, and sodium and zinc ionomers of ethylene/acrylic acid and methacrylic acid. As used herein, it is understood that copolymers may have more than two monomers i.e. include polymers sometimes referred to as terpolymers. The grafted polymers include such copolymers that have been grafted with maleic acid or maleic anhydride. In addition, the polymers may be cross-linked, subsequent to polymerization, with ionizing radiation or cross-linking agents in order to modify the properties of the polymer. Many examples of such polymers are available commercially e.g. from Du Pont Canada Inc., and/or the techniques for the fabrication and/or modification of such polymers are known in the art. In embodiments of the invention, the thermoplastic polymer of the composition may also include polyvinyl chloride in low proportions.

The composition used to form the layer also contains an inorganic component. The inorganic component may be in the form of elements per se, including alloys, or compounds of such elements. The compounds may be in the form of oxides, carbonates, sulphates, halides especially fluorides and iodides, hydroxides, tungstates, carbides, sulphides, uranates and tellurides or salts of organic acids e.g. acetates, stearates, naphthenates, benzoates, formates, propionates, and other organotin and organolead compounds. The inorganic component should be compatible with the copolymer component of the composition, although there may be interactions between the components that enhance the properties if the resultant composition. The elements or compounds are used in a finally divided form and are uniformly dispersed throughout the thermoplastic polymer.

The particle size distribution and particle shape are important parameters with respect to the compositions, especially to maximize the filler loading for a predetermined flexibility and elasticity or to maximize flexibility and elasticity at a predetermined filler loading. For instance, fine particles when coated with polymer require a considerable volume in comparison to the amount of filler. Thus, in preferred embodiments of the present invention, the filler used in the compositions has a low level of particles smaller than 400 mesh (38 microns). It is also preferred that the particles of largest diameter have a particle size that is not greater than 10% of the thickness of the layer or sheet that is to be produced from the composition e.g. a maximum particle size of 100 mesh (150 microns) is preferred. In addition, the particles are preferably spherical particles or substantially spherical particles; such particles are often produced on grinding friable particles of larger and more irregular shapes. Mathematical relationships relating to the preferred distribution of particle sizes may also be derived.

The inorganic composition consists essentially, in part, of an element in the form of at least one element or compound thereof selected from the group consisting of aluminum, antimony, barium, bismuth, cadmium, copper, iodine, iron, lead, magnesium, mercury, nickel, silver, tantalum, tellurium, tin, thallium, tungsten, uranium and zinc.

In preferred embodiments, the elements are selected from aluminum, antimony, barium, bismuth, cadmium, copper, iron, lead, mercury, nickel, silver, tantalum, tellurium, tin, tungsten and uranium. In further embodiments, the composition contains at least two of the elements, one of which is selected from bismuth, lead, mercury and uranium, and the other is selected from antimony, barium, cadmium, silver, tantalum, tellurium, tin and tungsten.

The composition used to form the layer comprises 81-96% by weight of the inorganic compounds and especially 85-95% by weight of inorganic compounds.

The composition may also contain a plasticizer for the copolymer of the composition. Any such plasticizer must be compatible with the copolymer, and be of a type and used in an amount that does not result in bleeding or blooming of the plasticizer from the resultant composition. Moreover, the plasticizer must be compatible with the inorganic component added as part of the composition. Examples of such plasticizers include aromatic processing oils e.g. Sunthene™ 4240 plasticizer, trioctyl trimellitate, diisononyl phthalate and dioctyl phthalate. Other examples include other phthalate esters, phosphate esters, fatty acid esters, adipates, azelates, oleates, sebacates and sulfonamides.

4

The polymer composition used to form the layer may contain antioxidants, UV and other stabilizers and pigments, as will be appreciated by those skilled in the art.

The composition contains 4-19% by weight of the copolymer and 0-10% by weight of plasticizer. In preferred embodiments, the composition contains 7-10% by weight of copolymer and 5-8% by weight of plasticizer.

The layer of the composition is preferably of a thickness suitable for the absorption of energy or for electrical conductivity. In particular, the thickness is such that the amount of attenuation of electromagnetic radiation having energies of greater than 0.1 keV e.g. x-rays is the equivalent of at least 0.1 mm of lead. In preferred embodiments, the thickness is such that the amount of attenuation is the equivalent of at least 0.1 mm, especially 0.25 mm of lead and in particular at least 0.5 mm of lead. Such equivalency is measured in the manner for determination of lead equivalency known in the art, using x-rays having an energy of 100 kV (also referred to as kVp), as described in Example I. In more general terms, equivalence is determined by measuring the broad area transmission of radiation of a sample of material for a radiation beam of known energy. The transmission is then measured in the same manner for a set of samples of commercially-pure lead of different known thicknesses, and the equivalence for the test sample is obtained by interpolation. Such equivalence only applies to the energy spectrum used in the test measurements. For diagnostic x-ray protection, a typical energy spectrum is obtained when a potential of 100kVp is applied to an x-ray tube. Transmission is defined as the ratio of the exposure (coulombs/kg-air) measured in an ionization chamber with material in the beam to the corresponding exposure obtained without material in the beam.

Measurement of the absorbence of x-rays is made by the method described hereinafter in the examples.

In a further preferred embodiment, the composition has a flexural modulus in the range of 1 to 100 MPa, and especially in the range of 1.5 to 12 MPa. Flexural modulus is measured by the procedure of ASTM D-790. The flexural modulus of the composition is important in order to provide apparel that is practical for wearing or which is capable of being used as a material for containers.

If the material is to be used as electromagnetic energy absorption material in the form of apparel, it requires an acceptable flexibility and drape. Such a term is understood in the art of fabrics and related industries, and relates to the ability of the material to conform to the contours of a human body or other shapes.

The compositions of the present invention may be obtained by feeding the ingredients to melt compounding or similar equipment, the actual equipment depending in part on the actual composition to be prepared and the melt processing characteristics of that composition. Examples of compounding equipment include two-roll mills, Banbury mixers, Farrell™ continuous mixers, Buss™ co-kneaders, Gelimat™ high intensity mixers and the like. Compositions of high content of inorganic component and/or containing grafted polymers may be more difficult to process so as to obtain uniform compositions, and may require the use of high intensity mixers or the like. For instance, compositions of the invention may be compounded using a Banbury twin rotor internal mixer by addition of all of the ingredients into the mixer. It may, however, be preferable to prepare concentrates of plasticizer and/or the elements or compounds in polymer, and then compound the combinations of the concentrates in a high shear mixer; such use of concentrates may be less hazardous to operators of the equipment. The composition may be formed into sheet by extrusion, calendering, compression moulding or the like, a preferred method being by calendering.

Layer(s) of fabric may be added to the composition simultaneously with the formation of the layer of the composition or preferably in a separate step e.g. using a lamination technique; lamination may be achieved using adhesives or utilizing adhesive properties of the polymer used in forming the composition.

The present invention may be used in the form of apparel to protect the wearer from radiation, especially x-ray radiation, or shields for apparatus that produces radiation. The apparel may be in the form of full garments or in the form of vests or the like to protect portions of the human body. Alternately, the layers of the present invention may be used as containers for radiation emitting products.

Although the present invention has been described with particular reference to layers of radiation protection material in the form of apparel or containers for radiation-emiitting materials, it is to be understood that the layers may also be in the form of coatings on or around an object. The attenuation material of the invention may also be used in a variety of other end-uses.

The present invention is illustrated by the following examples; unless noted to the contrary, all particles were 100-200 mesh:

Example I

A composition of PbO (81% by weight) in an ethylene/vinyl acetate copolymer, without plasticizer, was prepared. The composition was tested for absorption of x-rays using the following procedure:

Exposure rate was measured using a calibrated ionization chamber at a position 100 cm from a tungsten target x-ray tube collimated to provide a beam measuring 8 cm x 8 cm. The tube was powered by a constant-potential x-ray generator providing 100 kV at 10 mA with a resultant half-value layer (HVL) of 5.0 mm aluminum. Variation in output was less than 0.5%/hour. Samples of the compositions and of lead of known thickness were placed in the beam, 15 cm above the ionization chamber to determine the relative transmissions, and the lead equivalence for the composition was obtained by interpolation.

Using the above procedure, it was found that the x-ray absorption equivalent to 0.5 mm of lead was 5.68 kg/m$^2$.

## Example II

The following compositions were prepared:

| Component | Composition* | |
|---|---|---|
| | A | B |
| Polymer** | | |
| I | 5.70 | 9.18 |
| II | 2.87 | - |
| Plasticizer*** | 6.43 | 5.82 |
| Filler | | |
| PbO | 23.38 | 23.38 |
| WO$_3$ | 21.25 | 21.25 |
| BaF$_2$ | 40.38 | 40.38 |
| Density (g/cm$^3$) | 3.39 | 3.39 |

\* amounts are in wt. %

\*\* Polymer I was an ethylene/vinyl acetate copolymer having a vinyl acetate content of 36% and a melt index of 0.8 dg/min. Polymer II was an ethylene/vinyl acetate copolymer having a vinyl acetate content of 33% and a melt index of 25 dg/min, that had been melt grafted with about 1.2% by weight of maleic anhydride.

\*\*\* The plasticizer was an aromatic processing oil, available as Sunthene 4240 processing oil from Sunoco Inc. of Toronto, Ontario, Canada.

Compositions A and B were formed by blending the components in a Brabender Plasticorder™ twin rotor mixer at 170°C. Sheets of the compounded composition were then formed by compression moulding, the sheets having a thickness of 1.59 mm.

The materials obtained had an absorbence to x-rays equivalent to 0.58 mm of lead. It was found that the weight equivalent required to provide the absorption exhibited by 0.5 mm of lead was 5.35 kg/m$^2$ for both materials. This represents a weight saving, compared to lead, of 36% but a weight saving compared to so-called "lead-vinyl" having 80% lead in 20% polyvinyl chloride (w/w), which weighs 7.3 kg/m$^2$, of 27%.

## Example III

The following composition was prepared:

6

| Component | Composition* |
|---|---|
| | C |
| Polymer** | |
| I | 5.70 |
| II | 2.87 |
| Plasticizer*** | 6.43 |
| Filler | |
| PbO | 46.75 |
| BaWO₄ | 38.25 |

* amounts are in wt. %
** Polymer I was an ethylene/vinyl acetate copolymer having a vinyl acetate content of 36% and a melt index of 0.8 dg/min. Polymer II was an ethylene/vinyl acetate copolymer having a vinyl acetate content of 33% and a melt index of 25 dg/min, that had been melt grafted with about 1.2% by weight of maleic anhydride.
*** The plasticizer was an aromatic processing oil, available as Sunthene 4240 processing oil from Sunoco Inc. of Toronto, Ontario, Canada.

Composition C was formed by blending the components in a Banbury twin rotor high intensity mixer by feeding the components of the composition to the mixer. The composition obtained was formed into sheets using a calendering process at a processing temperature of about 50-55° C, the sheet having a thickness of 0.81 mm. The sheet was laminated to nylon fabric using the adhesive properties of the polymer mixture at elevated temperature.

Absorbence to x-rays was measured by the procedure of Example I. It was found that for absorption equivalent to 0.5 mm of lead, the composition weighed $5.73 \text{ kg/m}^2$. The elemental weight saving compared to 0.5 mm of lead was 21% and the sample weight saving compared to lead/vinyl was also 21%.

Additional tests were carried out using the procedure of Example I for the measurement of absorption to x-rays but at 60kVp, 80 kVp, 100kVp and 120kVp and the lead equivalence was determined. At 100 kVp, the sheet tested was equivalent to 0.12 mm of lead; the corresponding results at 60kVp, 80 kVp and 120 kVp were 0.10 mm, 0.10 mm and 0.12 mm.

## Example IV

The following composition was prepared, the amounts being on a weight basis:

| Lead oxide (PbO) | 48.2% |
|---|---|
| Barium tungstate | 39.4% |
| Copolymer | 9.3% |
| Plasticizer | 3.1% |

The copolymer was a blend of Polymers I and II of Example II, in the same ratio, and the plasticizer was Sunthene 4240 aromatic processing oil. The composition had a specific gravity of $3.85 \text{ g/cm}^3$.

Films of the composition were subjected to x-rays and the absorption characteristics of the composition were determined using the procedure of Example I. It was found that the weight equivalent required to provide the absorption exhibited by 0.5 mm of lead was $5.54 \text{ kg/m}^2$. This represents a weight saving, compared to lead, of 2% but a weight saving compared to so-called "lead-vinyl" having 80% lead in 20% polyvinyl chloride (w/w), which weighs $7.3 \text{ kg/m}^2$, of 24%.

## Example V

A composition was formed from Polymer II of Example II (20% by weight), lead oxide (PbO, 27% by weight), stannous oxide (SnO, 26.5% by weight) and Barium sulphate (BaSO$_4$, 26.5% by weight). The composition did not contain a plasticizer.

Films of the composition were subjected to x-rays and the absorption characteristics of the composition were determined, using the procedure of Example I. It was found that the weight equivalent required to provide the absorption exhibited by 0.5 mm of lead was 4.46 kg/m$^2$. This represents a weight saving, compared to the lead, of 22% and a weight saving compared to so-called "lead-vinyl" having 80% lead in 20% polyvinyl chloride (w/w) of 5%.

## Example VI

The procedure of Example I was repeated using a composition of lead monoxide (PbO)(29.75% by weight), barium oxide (55.25% by weight) and ethylene/vinyl acetate copolymer (15.0% by weight). Using the procedure of Example I, it was found that the Energy Absorption (equivalent to 0.5 mm of lead) was 5.65 kg/m$^2$ and the weight saving compared to lead/polyvinyl chloride was 23%.

## Example VII

A composition of PbO (29.75% by weight) and barium oxide (55.25% by weight) in an ethylene/vinyl acetate copolymer (15% by weight) was prepared. X-ray absorption was measured, for 100 kVp, using the procedure of Example I.

It was found that for absorption equivalent to 0.5 mm of lead, the composition weighed 5.65 kg/m$^2$, or 4.35 kg/m$^2$ based on the amount of absorbing elements only. For the same mass of absorbing elements, the absorption is equivalent to 0.62 mm of lead, and for the same mass of sample, the absorption is equivalent to 0.51 mm of lead.

## Example VIII

A composition of lead tungstate (46.75% by weight) and barium fluoride (38.25% by weight) in an unplasticized ethylene/vinyl acetate copolymer (15% by weight). The x-ray absorption was measured using the procedure of Example I was prepared.

It was found that for absorption equivalent to 0.5 mm of lead, the composition weighed 5.9 kg/m$^2$, or 4.12 kg/m$^2$ based on the amount of absorbing elements only. The elemental weight saving compared to 0.5 mm of lead was 27% and the sample weight saving compared to lead/vinyl was 19%.

## Example IX

A composition of metallic lead (21.675% by weight), tungsten trioxide (22.95% by weight) and barium fluoride (40.375% by weight) was prepared in Polymer A (7.50% by weight) and Polymer B (3.75% by weight) was prepared. The composition also contained 3.75% by weight of trioctyl trimellitate. Polymer A was a blend of stabilized polyvinyl chloride with an ethylene/vinyl acetate/carbon monoxide copolymer, and Polymer B was an ethylene/vinyl acetate/carbon monoxide copolymer having a melt index of about 35 dg/min.

It was found that for absorption equivalent to 0.5 mm of lead, the composition weighed 5.48 kg/m$^2$, or 3.91 kg/m$^2$ based on the amount of absorbing elements only. The elemental weight saving compared to 0.5 mm of lead was 31% and the sample weight saving compared to lead/vinyl was 25%.

## Example X

A composition of metallic lead (92% by weight) in a blend of ethylene/vinyl acetate copolymers containing Sunthene 4240 aromatic processing oil was prepared using the Brabender melt processing apparatus. The metallic lead comprised 49% by volume of the composition; the lead had a particle size distribution such that 1-2% (by weight) would pass through a 100 mesh screen, an additional 24-28% would pass through a 200 mesh screen, an additional 25-30% would pass through a 325 mesh screen and the remainder was retained on the latter screen. The composition, of density 6.05 g/cm$^3$, was formed into highly flexible sheet having a thickness of 46 microns (18 mil). X-ray absorption was measured using the procedure of Example I.

It was found that for absorption equivalent to 0.5 mm of lead, the composition weighed 6.1 kg/min, and that the weight saving compared with lead-vinyl was 16%.

The sheet of this example could be used for attenuation of x-rays and gamma rays, as well as for absorption of sound.

## Example XI

A composition of copper powder (90.3% by weight) in a blend of ethylene/vinyl acetate copolymers containing Sunthene 4240 aromatic processing oil was prepared using the Brabender melt processing apparatus. The metallic copper comprised 50% by volume of the composition; the copper had a particle size distribution such that 27% (by weight) would pass through a 150 mesh screen, an additional 49% would pass through a 200 mesh screen, an additional 22% would pass through a 325 mesh screen and the remainder was retained on the latter screen. The composition, of density 4.93 g/cm$^3$, was formed into highly flexible electrically conductive sheet having a thickness of 56 microns (22 mil).

## Example XII

A composition of lead oxide (81% by weight) in an ethylene/vinyl acetate copolymer, which did not contain a plasticizer, was prepared using the Brabender melt processing apparatus. The composition, which had a density of 3.53 g/cm$^3$, was pressed into sheet. X-ray absorption was measured using the procedure of Example I.

It was found that for absorption equivalent to 0.5 mm of lead, the composition weighed 7.7 kg/m$^2$, and that the additional weight compared with lead-vinyl was 6%.

The sheet of this example could be used as a low-cost x-ray attenuation material.

## Example XIII

A composition of lead oxide (44% by weight) and barium tungstate (36% by weight) in an ethylene/vinyl acetate copolymer containing dioctyl phthalate as plasticizer, was prepared using the Brabender melt processing apparatus. The composition, which had a density of 3.09 g/cm$^3$, was pressed into sheet. The sheet had a flexural modulus of 10.9 MPa.

The sheet of this example could be used as an x-ray attenuation material.

## Example XIV

A composition of barytes (barium sulphate, 81% by weight) in an ethylene/vinyl acetate copolymer was prepared using the Brabender melt processing apparatus. The composition, which had a filler content of 46% by volume, was pressed into sheet. The sheet had a density of 2.60 g/cm$^3$, and in x-ray absorption tests represented a saving of 21% in weight compared with lead.

## Example XV

A composition of metallic lead (32.2% by weight), metallic tin (27.6% by weight) and metallic tungsten (32.3% by weight) was prepared in an ethylene/vinyl acetate copolymer (7.9% by weight) using the Brabender melt processing apparatus; thus, the composition contained 92.1% by weight of inorganic components. The polymer composition obtained had a density of 6.03 g/cm$^3$.

Computer analysis indicated that the sample would provide an elemental weight saving compared to lead of 26% and a sample weight saving compared to lead/vinyl of 38%.

## Example XVI

A composition of lead sulphide (90% by weight) in a blend of ethylene/vinyl acetate copolymers (6% by weight) containing Sunthene 4240 aromatic processing oil (4% by weight) was prepared. The composition had a density of 4.44 g/cm$^3$ and a filler content of 90% by weight and 55% by volume. Sheet formed from the composition was flexible, tough and resilient.

As a comparison, a composition was formed from lead sulphide (85.5% by weight) in polyvinyl chloride (8.5% by weight) and dioctyl phthalate plasticizer (6% by weight). The compostion had a density of 4.27 g/cm$^3$ and a filler content of 85.5% by weight and 50% by volume. Sheet formed from this composition was brittle with no significant tensile strength or flexibility.

This example shows that polyvinyl chloride would have to be used at filler loadings that are lower than those used with the ethylene/vinyl acetate copolymers and with a corresponding increase in overall weight, volume and thickness in order to achieve the same amount of x-ray attenuation.

## Example XVII

A composition was formed from metallic lead (21.7% by weight), tungsten trioxide (23% by weight) and barium fluoride (40.3% by weight) in a blend of stabilized polyvinyl chloride and ethylene/butyl acrylate/carbon monoxide copolymer (4.5% by weight) and ethylene/vinyl acetate/carbon monoxide copolymer (10.5% by weight). The composition obtained had a filler content of 85% by weight and 49% by volume, and had a density of 3.63 g/cm$^3$. Sheet formed from the composition was brittle.

As a comparison, a composition was formed from lead metal (50.3% by weight) and barium tungstate (41.1% by weight) in a blend of stabilized polyvinyl chloride and ethylene/butyl acrylate/carbon monoxide (11.9% by weight) containing Irganox 1010 antioxidant (0.5% by weight) and trioctyl trimellitate plasticizer (3.2% by weight). The composition obtained had a filler content of 91.4% by weight and 61% by volume, and had a density of 4.85 g/cm$^3$. Sheet formed from the composition was flexible.

Both of the compositions above are within the scope of the present invention. Even though the second composition had a higher filler content, the sheet obtained was flexible. This is believed to have occurred as a result of the use of the stabilizer to prevent or reduce the amount of cross-linking occurring during processing as a result of the presence of lead oxide on the surface of the metallic lead. Thus, additives or processing aids added to the compositions may have significant effects on the properties of the compositions that are obtained.

## Example XVIII

A composition was formed from metallic lead (27.8% by weight) and barium tungstate (59.7% by weight) in a blend of ethylene/vinyl acetate copolymers (7.15% by weight) and Sunthene aromatic processing oil (5.39% by weight) using a Banbury apparatus. The composition was then calendared into sheet having thicknesses of 75 microns (30 mil) and 150 microns (60 mil). The tensile strength of the sheets was greater than 35 kg/cm$^2$, indicating that the sheet had a high degree of flexibility.

**Claims**

1. A highly filled material comprising a layer formed from a composition comprising:

(a) 4-19% by weight of a thermoplastic polymer selected from copolymers of ethylene with at least one of vinyl alkylate, alkyl acrylate, alkyl methacrylate, glycidyl methacrylate, acrylic acid, methacrylic acid and carbon monoxide, and mixtures thereof, ionomers of such copolymers, and such copolymers that have been grafted with a monomer selected from the group consisting of ethylenically unsaturated carboxylic acids and anhydrides and other derivatives thereof;

(b) 0-10% by weight of a plasticizer for such copolymers; and

(c) 81-96% by weight of a solid inorganic composition.

2. The highly filled material of Claim 1 in which the inorganic composition consists essentially of at least one element, or compound thereof, selected from the group consisting of aluminum, antimony, barium, bismuth, cadmium, copper, iodine, iron, lead, magnesium, mercury, nickel, silver, tantalum, tellurium, tin, thallium, tungsten, uranium and zinc.

3. The highly filled material of Claim 2 in which the inorganic composition contains at least one element selected from bismuth, lead, mercury and uranium, and at least one element selected from antimony, barium, mercury, silver, tantalum, tellurium, tin and tungsten.

4. The highly filled material of Claim 2 in which the elements are selected from aluminum, antimony, barium, bismuth, cadmium, copper, iron, lead, mercury, nickel, silver, tantalum, tellurium, tin, tungsten and uranium.

5. The highly filled material of any one of Claims 1-4 in which the polymer composition has a flexural modulus in the range of 1 to 100 MPa.

6. The highly filled material of Claim 5 in which the flexural modulus is in the range of 1.5 to 12 MPa.

7. The highly filled material of any one of Claims 1-6 in which the polymer composition contains a plasticizer.

8. The highly filled material of Claim 7 in which the polymer composition contains 7-10% by weight of copolymer and 5-8% by weight of plasticizer.

9. The highly filled material of any one of Claims 1-8 in which the inorganic composition is in the form of particles having diameters in the range of 38-150 microns.

10. The highly filled material of Claim 9 in which the particles act at least substantially as spherical particles.

11. The highly filled material of any one of Claims 2-10 in which the inorganic composition is in the form of elements, or alloys thereof.

12. The highly filled material of any one of Claims 2-10 in which the inorganic composition is in the form of compounds of the elements.

13. The highly filled material of any one of Claims 1-12 in which the copolymer is selected from the group consisting of ethylene/vinyl acetate copolymers, ethylene/methyl acrylate copolymers, ethylene/methyl methacrylate copolymers, ethylene/acrylic acid copolymers, ethylene/alkyl acrylate/glycidyl methacrylate copolymers, ethylene/methacrylic acid copolymers, ethylene/n-butyl acrylate/carbon monoxide copolymers, ethylene/vinyl acetate/carbon monoxide copolymers, sodium and zinc ionomers of ethylene/acrylic acid and methacrylic acid copolymers, and such copolymers that have been grafted with maleic acid or maleic anhydride.

14. The highly filled material of any one of Claims 1-13 in which the layer of the polymer composition has a thickness such that the amount of attenuation of electromagnetic radiation having energies of greater than 10 keV is the equivalent of at least 0.1 mm of lead.

**EUROPEAN SEARCH REPORT**

Application Number

EP 89 31 2179

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-1 127 581 (ASSOCIATED LEAD MANUFACTURERS LTD) * Claims * --- | 1 | C 08 K 3/00 C 08 L 23/08 C 08 L 51/06 G 21 F 1/10 |
| P,A | EP-A-0 339 760 (M & T CHEMICALS INC.) * Claims * --- | 1 | |
| A | EP-A-0 242 294 (AEROSPATIALE SOCIETE NATIONALE INDUSTRIELLE) * Claims * --- | 1 | |
| A | CH-A- 666 757 (GEFITEC S.A.) * Claims * --- | 1 | |
| A | DE-A-1 913 099 (GIKEN KOGYO K.K.) * Claims * ----- | 1 | |
| | | | TECHNICAL FIELDS SEARCHED (Int. Cl.5) |
| | | | C 08 K C 08 L G 21 F |

| The present search report has been drawn up for all claims | | |
|---|---|---|
| Place of search THE HAGUE | Date of completion of the search 02-03-1990 | Examiner DE LOS ARCOS Y VELAZQUEZ |